# EUROPÄISCHE PATENTSCHRIFT

(11) **EP 2 481 527 B1**
(45) Veröffentlichungstag und Bekanntmachung des Hinweises auf die Patenterteilung: **18.06.2014**
(21) Anmeldenummer: 11195880.7
(22) Anmeldetag: 28.12.2011
(51) Int. Cl.: B25F 5/00, B23D 47/00, B27B 17/00

(54) **Motorarbeitsgerät**
Motorised work device
Appareil de travail motorisé

(30) Priorität: 26.01.2011 DE 202011000186 U
(43) Veröffentlichungstag der Anmeldung: 01.08.2012
(73) Patentinhaber: Makita Corporation, Anjo, Aichi 446-8502 (JP)
(72) Erfinder: Schönfeld, Michael, 23821 Rohlstorf (DE); Döring, Manfred, 19246 Zarrentin am Schaalsee OT Neuhof (DE)
(74) Vertreter: Richter Werdermann Gerbaulet Hofmann

(56) Entgegenhaltungen:
- WO-A1-2007/069946
- US-A- 5 016 355
- US-A- 6 016 604

## Beschreibung

Die vorliegende Erfindung betrifft ein Motorarbeitsgerät, insbesondere ein motorbetriebenes Trennschleifgerät oder ein motorbetriebenes Sägegerät, mit einer Motoreinheit, aufweisend ein Werkzeug zum Eingriff in ein Werkstück, und mit einer Rahmeneinheit, aufweisend ein Griffelement zum handhaltbaren Betrieb des Gerätes, wobei zwischen der Motoreinheit und der Rahmeneinheit eine mechanische Kopplung vorgesehen ist, die wenigstens ein Dämpfungselement umfasst. Ein solches Gerät ist aus US 5 016 355 bekannt.

### STAND DER TECHNIK

Die DE 7304706U1 zeigt ein Motorarbeitsgerät am Beispiel einer tragbaren Motorsäge mit einer Motoreinheit, aufweisend ein Werkzeug zum Eingriff in ein Werkstück, und mit einer Rahmeneinheit, die ein Griffelement aufweist, über das das Motorarbeitsgerät gehalten werden kann. Zwischen der Motoreinheit und der Rahmeneinheit sind Dämpfungselemente vorgesehen, um eine Vibrationsdämpfung zwischen der Motoreinheit und der Rahmeneinheit mit dem Griffelement zu schaffen.

Die US-PS 5,016,355 offenbart ein Gehäuse eines handgehaltenen Motorwerkzeugs, aus gegossenem Polymermaterial, mit einem Hauptkörper und einem hinteren Griff, der mit einem ersten Ende fest mit dem Hauptkörper verbunden ist, wobei der hintere Griff ein einseitig angebrachtes zweites Ende besitzt und der hintere Griff in einseitig eingespannter Art zumindest teilweise elastisch verformbar ist; und das Gehäuse ferner mit einer Einrichtung zum Begrenzen der Verformung des hinteren Griffs versehen ist, wobei diese Einrichtung das zweite Ende und einen relativ zum zweiten Ende gelegenen Abschnitt des Hauptkörpers umfasst und so bemessen und gestaltet ist, dass sie eine begrenzte Relativbewegung zwischen diesen bietet, so dass eine Auslenkung des zweiten Endes bezüglich einer ersten Position eine vorgegebene Beschränkung erfährt, um die Verformung des hinteren Griffs zu begrenzen, und die einseitige Anbringung des hinteren Griffs es ermöglicht, während des Betriebs des Werkzeugs entstehende Schwingungen an einer für die Bedienungsperson bestimmte Griffstelle am hinteren Griff zu verringern.

Motorarbeitsgeräte können einzylindrige Hubkolbenmotoren aufweisen, die starke Vibrationen im Motorarbeitsgerät erzeugen. Der Forderung einer geringen Schwingungsbelastung einer Bedienperson, die das Motorarbeitsgerät mit den Händen mittels des Griffelementes führt, kann weitestgehend entsprochen werden, wenn zwischen der Motoreinheit, die die Schwingungsanregung erzeugt, und der Rahmeneinheit mit dem Griffelement Dämpfungselemente vorgesehen werden. Damit werden die Schwingungen in der Motoreinheit nicht oder nur in geringem Maße auf die Rahmeneinheit mit dem Griffelement übertragen.

Insbesondere dann, wenn das Werkzeug in Eingriff mit dem Werkstück steht, erfolgt neben dem Betrieb des Motors eine weitere Schwingungsanregung, und die Rahmeneinheit kann gegen die Schwingungsanregung durch den Werkzeugeingriff ebenfalls über die Dämpfungselemente minimiert werden. Beispielsweise können Beschleunigungswerte der Motoreinheit von 10 m/s² und mehr erreicht werden, wobei durch die Dämpfungselemente in der mechani-schen Kopplung zur Rahmeneinheit Beschleunigungswerte in der Rahmeneinheit von unter 5 m/s² ermöglicht werden. Durch eine sehr weiche Auslegung der Dämpfungselemente können Beschleunigungswerte in der Rahmeneinheit sogar von unter 2,5 m/s² erreicht werden, sodass eine Bedienperson der Vibrationen beispielsweise eine Expositionszeit von 8 Stunden täglich auch ohne physiologische Schädigung ausgesetzt sein kann.

Insbesondere bei handgeführten Trennschleifgeräten oder auch Blattsägegeräten, mit denen besonders harte Materialien wie Stahl oder Stein getrennt werden können, ist bei einer weicheren Auslegung der Dämpfungselemente nachteilhaft, dass eine genaue Führung der Motoreinheit mit dem Werkzeug über die Rahmeneinheit mit dem Griffelement nicht mehr ohne Weiteres möglich ist. Insbesondere durch die Schwingungsanregung kann die Motoreinheit mit dem Werkzeug eine Eigendynamik entwickeln, und das positionsgenaue Führen des Werkzeugs gegen das Werkstück, insbesondere beim Ansetzen des Werkzeugs vor dem Eingriff in das Werkstück und auch während des Anschnittes mit geringer Schnitttiefe, ist nicht mehr gewährleistet. Gerade bei harten Materialien wie Stahl oder Granit ist das Ansetzen des Werkzeugs, beispielsweise der Trennschleifscheibe oder des Sägeblattes, auf einer Markierungslinie nahezu unmöglich, da die Rahmeneinheit mit dem Werkzeug bei Kontakt des Werkzeugs mit der Oberfläche des Werkstückes Sprungbewegungen ausführen kann. Durch eine sehr nachgiebige mechanische Kopplung zwischen der Rahmeneinheit und der Motoreinheit können diese Bewegungen durch eine Handführung nicht mehr hinreichend korrigiert werden. Erst wenn ein Schnitt in das Werkstück mit einer Mindesttiefe erfolgt ist, durch die die Wirkung einer Werkzeugführung erreicht ist, kann ein seitliches Ausbrechen des Werkzeugs aus der Schnittfuge verhindert werden.

Es ist daher die Aufgabe der vorliegenden Erfindung, ein Arbeitsgerät zu schaffen, das die Nachteile des vorstehend bezeichneten Standes der Technik überwindet und das eine verbesserte Werkzeugführung ermöglicht. Insbesondere ist es die Aufgabe der vorliegenden Erfindung, ein Motorarbeitsgerät derart weiterzubilden, dass bei einer verbesserten Vibrationsdämpfung zwischen der Motoreinheit und der Rahmeneinheit eine genaue Führung des Werkzeugs möglich ist.

Diese Aufgabe wird ausgehend von einem Arbeitsgerät gemäß dem Oberbegriff des Anspruches 1 mit den kennzeichnenden Merkmalen gelöst. Zweckmäßige Weiterbildungen der Erfindung sind in den abhängigen Ansprüchen angegeben.

### OFFENBARUNG DER ERFINDUNG

Die Erfindung schließt die technische Lehre ein, dass die Rahmeneinheit wenigstens ein Anlageelement aufweist, gegen das die Motoreinheit anliegt, wenn eine vom Werkstück auf das Werkzeug wirkende Arbeitskraft einen Wert unterhalb eines Mindestwertes aufweist.

Die Erfindung geht dabei von dem Gedanken aus, durch das Anlageelement eine verbesserte Übertragung einer Führungsbewegung von der Rahmeneinheit in die Motoreinheit zu ermöglichen. Befindet sich das Werkzeug nicht in Eingriff mit dem Werkstück bzw. erreicht eine vom Werkstück auf das Werkzeug wirkende Arbeitskraft einen Mindestwert noch nicht und muss das Werkzeug über dem Werkstück geführt werden, beispielsweise um das Werkzeug auf einer Markierung auf dem Werkstück anzusetzen und einen genauen Anschnitt im Werkstück zu erreichen, so wird die genaue Führung des Werkstückes über die mechanische Kopplung zwischen der Rahmeneinheit und der Motoreinheit mittels des Anlageelementes geschaffen. Das Anlageelement ist derart ausgebildet, dass eine Bewegungsführung von der Rahmeneinheit in die Motoreinheit ermöglicht wird, und sodass folglich eine Bewegungsführung vom Griffelement in das Werkzeug ermöglicht wird. In dieser Betriebssituation ist durch die Anlage des Stützelements im oder am Anlageelement eine Verbindung zwischen der Rahmeneinheit und der Werkzeugeinheit bzw. der Motoreinheit so beschaffen, dass das zwischengeschaltete Feder-Dämpfungssystem abgeschaltet ist und eine direkte Verbindung geschaffen wird. Greift das Werkzeug in das Werkstück ein, löst sich die Motoreinheit vom Anlageelement beim Aufsetzen des Werkzeugs auf das Werkstück bzw. bei Erreichen der Mindestkraft, die vom Werkzeug auf das Werkstück wirkt, und die mechanische Kopplung zwischen der Rahmeneinheit und der Motoreinheit ist wieder auf das oder die Dämpfungselemente begrenzt, um eine optimale Schwingungsdämpfung zu ermöglichen.

Alternativ kann auch die Motoreinheit ein Anlageelement aufweisen, gegen das die Rahmeneinheit anliegt, wenn sich das Werkzeug nicht in Eingriff mit dem Werkstück befindet bzw. wenn die Mindestkraft nicht erreicht ist.

Die Motoreinheit kann schwerkraftbedingt gegen das Anlageelement zur Anlage gelangen, wenn der Wert der Arbeitskraft einen Wert unterhalb des Mindestwertes aufweist, insbesondere wenn sich das Werkzeug nicht in Eingriff mit dem Werkstück befindet. Das Eigengewicht der Motoreinheit wird zunächst über die Dämpfungselemente aufgenommen. Durch die Nachgiebigkeit der Dämpfungselemente verlagert sich die Motoreinheit jedoch in der Rahmeneinheit, bis die Motoreinheit gegen das Anlageelement der Rahmeneinheit anliegt. Folglich wird noch ein Teil des Eigengewichtes der Motoreinheit über die Dämpfungselemente aufgenommen, die Nachgiebigkeit der Dämpfungselemente kann jedoch so gewählt sein, dass die Motoreinheit aufgrund des Eigengewichtes mit einer gewissen Kontaktkraft gegen das Anlageelement anstößt.

Wird das Werkzeug mit dem Werkstück in Eingriff gebracht, und vom Benutzer die entsprechende Andruckkraft für das Werkzeug auf die Rahmeneinheit aufgebraucht, so wirkt eine Kraft vom Werkstück auf das Werkzeug in einer Richtung, durch die die Motoreinheit vom Anlageelement wieder gelöst wird, was insbesondere bei Erreichen der Mindestkraft erfolgt. Folglich wird erreicht, dass die mechanische Kopplung zwischen der Motoreinheit und der Rahmeneinheit wieder auf die Dämpfungselemente begrenzt ist, wenn sich das Werkzeug im Eingriff mit dem Werkstück befindet. Damit kann die volle Vibrationsdämpfung erreicht werden, wobei insbesondere die Vibrationen, die durch den Werkzeugeingriff in das Werkstück entstehen, wirksam gedämpft werden können, und die Vibrationen werden nicht oder nur vermindert auf die Rahmeneinheit übertragen.

Beispielsweise kann der Mindestwert der Arbeitskraft vom Werkstück auf das Werkzeug 10N bis 110N, vorzugsweise 40N bis 80N und besonders bevorzugt 60N betragen, ab der sich die Rahmeneinheit aus dem Anlageelement löst. Mit einer Kraft von beispielsweise 60N kann durch das Werkzeug ein Anschnitt in einem Werkstück höherer Härte erfolgen und der Anschnitt hat bereits eine Tiefe, die hinreichend ist, um eine Führung des Werkzeugs zu schaffen, sodass sich die Rahmeneinheit aus dem Anlageelement lösen kann und sodass die mechanische Kopplung zwischen der Motoreinheit und der Rahmeneinheit wieder auf das wenigstens eine Dämpfungselement begrenzt ist.

Vorteilhafterweise kann wenigstens ein Dämpfungselement zumindest eine Dämpfungsfeder aufweisen, wobei die Dämpfungsfeder alternativ oder zusätzlich zur schwerkraftbedingten Anlage der Motoreinheit gegen das Anlageelement derart vorgespannt ist, dass die Motoreinheit gegen das Anlageelement zur Anlage gelangt, wenn der Wert der Arbeitskraft einen Wert unterhalb des Mindestwertes aufweist, insbesondere wenn sich das Werkzeug nicht in Eingriff mit dem Werkstück befindet. Die Kraft, die vom Werkstück auf das Werkzeug wirkt, wenn dieses in Eingriff mit dem Werkstück steht, ist so groß, dass sowohl das Eigengewicht der Motoreinheit als auch die Vorspannung der Dämpfungsfeder überwunden werden kann, sodass sich die Motoreinheit von der Anlage gegen das Anlageelement löst.

Gemäß einer vorteilhaften Weiterbildung der Erfindung kann die Motoreinheit wenigstens ein Stützelement aufweisen, das gegen das Anlageelement anliegt, wenn der Wert der Arbeitskraft einen Wert unterhalb des Mindestwertes aufweist, insbesondere wenn sich das Werkzeug nicht in Eingriff mit dem Werkstück befindet. Insbesondere kann das Anlageelement U- oder V-förmig ausgebildet und das Stützelement zungenförmig ausgeführt sein, das derart in die U-Form des Anlageelementes in Eingriff gelangt, dass über das Griffelement wenigstens eine Höhen- und Seitenführung des Werkzeugs ermöglicht ist, wenn der Wert der Arbeitskraft einen Wert unterhalb des Mindestwertes aufweist, insbesondere wenn sich das Werkzeug nicht in Eingriff mit dem Werkstück befindet und folglich das Stützelement im Anlageelement eingreift. Greift das Werkzeug nicht in das Werkstück ein, kann trotz der Anordnung der Dämpfungselemente zwischen der Motoreinheit und der Rahmeneinheit eine genaue manuelle Führung des Werkzeugs über das Griffelement erfolgen. Greift das Werkzeug in das Werkstück ein, und löst sich das Stützelement aus dem Eingriff im Anlageelement, so kann sich das Werkzeug gegenüber dem Werkstück selbst zentrieren. Die Selbstzentrierung des Werkzeugs im Werkstück kann insbesondere bei handgehaltenen Trennschleifgeräten und/oder bei Motorhandsägen beobachtet werden. Folglich kann eine genaue Führung des Werkzeugs über das Griffelement entfallen, während eine maximale Vibrationsdämpfung in die Rahmeneinheit und folglich in das Griffelement ermöglicht ist.

Mit weiterem Vorteil kann das Anlageelement einen elastischen Dämpfungskörper aufweisen, der sich zwischen dem Anlageelement und der Motoreinheit, insbesondere zwischen dem Anlageelement und dem Stützelement, befindet, wenn dieses gegen das Anlageelement anliegt. Weist das Anlageelement eine U-Form auf, so kann der elastische Dämpfungskörper ebenfalls eine U-Form besitzen und in der U-Form des Anlageelementes eingefasst oder eingelegt sein. Gelangt das zungenförmige Stützelement gegen das Anlageelement zur Anlage, so befindet sich zwischen dem Anlageelement und dem Stützelement der elastische Dämpfungskörper, der auch dann eine Vibrationsdämpfung zwischen der Motoreinheit und der Rahmeneinheit ermöglicht, wenn der Wert der Arbeitskraft einen Wert unterhalb des Mindestwertes aufweist, insbesondere wenn sich das Werkzeug nicht in Eingriff mit dem Werkstück befindet und die Schwingungsanregung lediglich durch den Betrieb des Motors der Motoreinheit erfolgt. Die U-Form des Anlageelementes kann sich im Dämpfungskörper wiederholen, und trotz der elastischen Eigenschaft des Dämpfungskörpers ist eine gute Höhen- und Seitenführung des Werkzeugs über das Griffelement ermöglicht. Der elastische Dämpfungskörper kann in der U-Form des Anlageelementes eingeklebt oder auf dieses aufvulkanisiert sein.

Gemäß einer möglichen Ausführungsform des erfindungsgemäßen Motorarbeitsgerätes kann die mechanische Kopplung zwischen der Motoreinheit und der Rahmeneinheit drei Dämpfungselemente aufweisen, wobei vorzugsweise wenigstens ein Anlageelement mit einem zugeordneten Stützelement angrenzend an zumindest ein Dämpfungselement angeordnet ist. Weiterführend kann jedes Dämpfungselement ein Anlageelement, beispielsweise in einer U-Form, und insbesondere ein Stützelement, beispielsweise in einer Zungenform, zugeordnet sein. Das Anlageelement und insbesondere das zugeordnete Stützelement kann nach einer vorteilhaften Weiterbildung auch Bestandteil des jeweiligen Dämpfungselementes sein, und das Anlageelement und insbesondere das Stützelement ist integriert mit dem Dämpfungselement ausgeführt. Auf gleiche Weise kann dabei das jeweilige Stützelement gegen das jeweilige Anlageelement zur Anlage gelangen, wenn der Wert der Arbeitskraft einen Wert unterhalb des Mindestwertes aufweist, insbesondere wenn sich das Werkzeug nicht im Eingriff mit dem Werkstück befindet, und das Stützelement kann sich von der Anlage gegen das Anlageelement lösen, wenn das Werkzeug mit dem Werkstück in Eingriff gebracht wird und wenigstens die Mindestkraft vom Werkstück auf das Werkzeug wirkt, um das Stützelement aus der Anlage oder aus dem Eingriff an bzw. aus dem Anlageelement zu bewegen.

Mit besonderem Vorteil kann das Anlageelement zwischen der Motoreinheit und der Rahmeneinheit eine Anordnung aufweisen, die derart bestimmt ist, dass der Abstand zwischen dem Anlageelement und dem Werkzeug minimal ist. Damit wird erreicht, dass bereits bei einer geringen Arbeitskraft, die vom Werkstück auf das Werkzeug wirkt, das Stützelement aus dem Anlageelement bewegt werden kann. Insbesondere ist die Bewegung zwischen der Motoreinheit und der Rahmeneinheit in einem Bereich angrenzend an das Werkzeug besonders groß, und die Motoreinheit beziehungsweise das Stützelement kann sicher vom Anlageelement gelöst werden, wenn das Werkzeug in das Werkstück eingreift.

Nach einer möglichen weiteren Ausführungsform kann die Rahmeneinheit einen Bodenabschnitt aufweisen, wobei das Anlageelement am Bodenabschnitt angeordnet oder an diesen angeformt ist. Alternativ kann das Anlageelement in Gestalt einer Anformung oder eines einzelnen Elementes an jeder weiteren Position in der Rahmeneinheit angeordnet sein, wobei die U- oder V-förmige Ausrichtung des Anlageelementes derart gebildet ist, dass sich das Stützelement in das Anlageelement bewegt, wenn lediglich die Schwerkraft auf die Motoreinheit wirkt. Die Ausrichtung des Anlageelementes an der Schwerkraft setzt ein hinsichtlich der Arbeitslage des Motorarbeitsgerätes in Bezug auf die Schwerkraft einen gewöhnlichen Betrieb voraus, beispielsweise wenn die Rotationsebene des Werkzeugs in der Vertikalen verläuft. Soll eine Anlage der Motoreinheit gegen das Anlageelement auch in einer anderen Arbeitslage des Motorarbeitsgerätes sichergestellt sein, beispielsweise wenn die Rotationsebene des Werkzeugs in der Waagerechten verläuft, so kann das Anlageelement entsprechend ausgebildet sein oder es ist wenigstens ein weiteres Anlageelement zwischen der Motoreinheit und der Rahmeneinheit vorgesehen. Insbesondere können bei nicht gewöhnlicher Betriebslage die Dämpfungsfedern derart vorgespannt sein, dass die Motoreinheit gegen das Anlageelement zur Anlage gelangt, wenn sich das Werkzeug nicht in Eingriff mit dem Werkstück befindet.

Vorteilhafterweise kann die Motoreinheit einen Stützarm aufweisen, der sich in Richtung zum Bodenabschnitt der Rahmeneinheit hin erstreckt, wobei das Stützelement endseitig am Stützarm angeordnet ist. Die Rahmeneinheit kann C-förmig ausgeführt sein und die Motoreinheit wird durch die C-förmige Rahmeneinheit umschlossen. Dabei kann sich das Werkzeug in der Öffnung der C-Form befinden, sodass sich beispielsweise das Anlageelement und das zugeordnete Stützelement am unteren offenen Ende der C-Form der Rahmeneinheit befinden. Damit sind das Anlageelement und das zugeordnete Stützelement angrenzend an das Werkzeug angeordnet. Ein Stützarm kann sich in Richtung zum Anlageelement hin erstrecken, und das Stützelement kann dabei endseitig am Stützarm angeordnet sein.

### KURZE BESCHREIBUNG DER ZEICHNUNGEN

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt in rein schematischer Darstellung:
Figur 1 Ein Ausführungsbeispiel eines Motorarbeitsgerätes mit einem Anlageelement an der Rahmeneinheit und mit einem Stützelement an der Motoreinheit, wobei das Werkzeug nicht in Eingriff mit dem Werkstück gebracht ist, sodass das Stützelement im Anlageelement aufgenommen ist und
Figur 2 das Ausführungsbeispiel des Motorarbeitsgerätes gemäß Figur 1, wobei das Werkzeug mit dem Werkstück in Eingriff gebracht ist, sodass sich das Stützelement aus dem Anlageelement gelöst hat.

### BEVORZUGTES AUSFÜHRUNGBEISPIEL DER ERFINDUNG

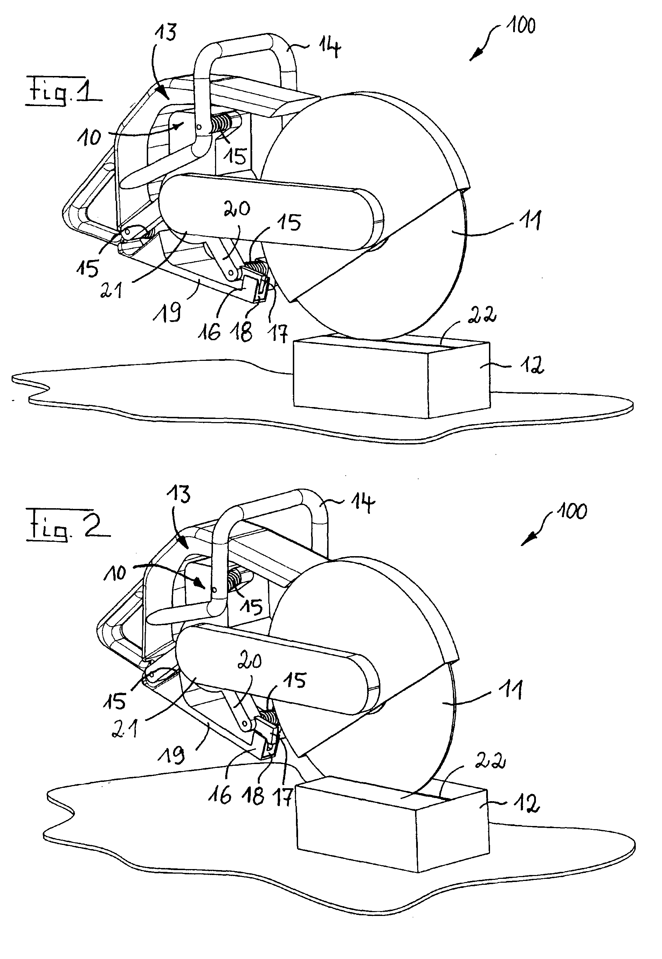

Die Figuren 1 und 2 zeigen ein Ausführungsbeispiel eines Motorarbeitsgerätes 100 mit den Merkmalen der vorliegenden Erfindung. Das Motorarbeitsgerät 100 ist beispielhaft als motorbetriebenes Trennschleifgerät dargestellt, und weist eine Motoreinheit 10 auf, die einen Antriebsmotor, beispielsweise einen Hubkolbenmotor, einen Schneidarm 21 und ein endseitig am Schneidarm 21 angeordnetes Werkzeug 11 umfasst. Der Motor, der Schneidarm 21 und das Werkzeug 11 bilden dabei eine starre Einheit.

Ferner weist das Motorarbeitsgerät 100 eine Rahmeneinheit 13 auf, die C-förmig ausgebildet ist und in der die Motoreinheit 10 aufgenommen ist. Um das Motorarbeitsgerät 100 manuell zu führen, besitzt die Rahmeneinheit 13 ein Griffelement 14, das starr an der Rahmeneinheit 13 angeordnet ist.

Die mechanische Kopplung zwischen der Motoreinheit 10 und der Rahmeneinheit 13 weist drei Dämpfungselemente 15 auf, die in Gestalt von Dämpfungsfedern 15 dargestellt sind. Die Dämpfungsfedern 15 sind in einer Dreiecksform um den Motor der Motoreinheit 10 herum angeordnet, und dienen zur Vibrationsdämpfung der Rahmeneinheit 13 gegenüber der Motoreinheit 10.

Erfindungsgemäß weist die Rahmeneinheit 13 ein Anlageelement 16 auf, gegen das die Motoreinheit 10 zur Anlage gelangen kann, wenn der Wert der Arbeitskraft zwischen dem Werkzeug 11 und dem Werkstück 12 einen Wert unterhalb eines Mindestwertes aufweist bzw. wenn das Werkzeug 11 noch nicht in Eingriff mit dem Werkstück 12 steht.

Figur 1 zeigt das Ausführungsbeispiel des Motorarbeitsgerätes 100, in dem sich das Werkzeug 11 nicht in Eingriff mit dem Werkstück 12 befindet, und folglich wirkt keine Kraft vom Werkstück 12 auf das Werkzeug 11. An der Motoreinheit 10 ist endseitig an einem Stützarm 20 ein Stützelement 17 angeordnet, das in Eingriff in das Anlageelement 16 gelangt ist. Die Nachgiebigkeit der Dämpfungsfedern 15 ist dabei derart bestimmt, dass das Eigengewicht der Motoreinheit 10 ausreicht, um das Stützelement 17 zur Anlage gegen das Anlageelement 16 zu bringen.

In der gezeigten Betriebssituation, in der sich das Stützelement 17 in Eingriff im Anlageelement 16 befindet, ist die mechanische Kopplung zwischen der Motoreinheit 10 und der Rahmeneinheit 13 durch den Eingriff des Stützelementes 17 im Anlageelement 16 erweitert. Durch den Eingriff des Stützelementes 17 in das Anlageelement 16 ist eine verbesserte Höhen- und Seitenführung des Werkzeugs 11 ermöglicht, und dieses kann beispielsweise auf einer Markierungslinie 22 auf dem Werkstück 12 besser angesetzt werden und ein Anschnitt durch das Werkzeug im Werkstück kann mit sehr guter Führung des Werkzeugs erfolgen. Um trotz der erfindungsgemäß verbesserten Höhen- und Seitenführung des Werkzeugs 11 durch die Handhabung des Motorarbeitsgerätes 100 über das Griffelement 14 dennoch eine Schwingungsdämpfung zwischen der Motoreinheit 10 und der Rahmeneinheit 13 zu erreichen, ist im Anlageelement 16 ein elastischer Dämpfungskörper 18 aufgenommen.

Das Anlageelement 16 ist im Bodenabschnitt 19 der Rahmeneinheit 13 angeordnet und weist eine U-Form auf. Das Stützelement 17 weist eine Zungenform auf und kann in die U-Form des Anlageelementes 16 eingreifen. Der elastische Dämpfungskörper 18 ist dabei derart in die U-Form des Anlageelementes 16 eingebracht, dass sich trotz Eingriff des Stützelementes 17 in das Anlageelement 16 der elastische Dämpfungskörper 18 zwischen der Motoreinheit 10 und der Rahmeneinheit 13 befindet. Damit kann wenigstens teilweise eine Schwingungsdämpfung zwischen der Motoreinheit 10 und der Rahmeneinheit 13 erreicht werden.

Figur 2 zeigt das Motorarbeitsgerät 100 mit einem Werkzeug 11, das sich in Eingriff mit dem Werkstück 12 befindet. Durch den Werkzeugeingriff erfolgt eine Krafteinwirkung vom Werkstück 12 auf das Werkzeug 11, wobei die Wirkungsrichtung der Kraft auf das Werkzeug 11 wenigstens mit einer Kraftkomponente entgegen der Schwerkraft der Motoreinheit 10 wirkt. Dadurch wird der schwerkraftbedingten Verlagerung der Motoreinheit 10 in der Rahmeneinheit 13 entgegengewirkt, und die Motoreinheit 10 verlagert sich in der Rahmeneinheit 13 durch die Krafteinwirkung auf das Werkzeug 11 derart, dass das Stützelement 17 aus dem Eingriff im Anlageelement 16 gelangt. Damit wird die mechanische Kopplung zwischen der Motoreinheit 10 und der Rahmeneinheit 13 wieder auf die drei Dämpfungsfedern 15 beschränkt, und es kann eine volle Vibrationsdämpfung zwischen der Motoreinheit 10 und der Rahmeneinheit 13 ermöglicht werden.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktive Einzelheiten, räumliche Anordnungen und Verfahrensschritte, können sowohl für sich als auch in den verschiedensten Kombinationen erfindungswesentlich sein.

Insbesondere kann die Nachgiebigkeit der Dämpfungselemente 15 zwischen der Motoreinheit 10 und der Rahmeneinheit 13 weiter vergrößert werden, um die Schwingungsdämpfung zwischen der Motoreinheit 10 und der Rahmeneinheit 13 weiter zu verbessern. Durch die Führungsfunktion, die durch den Eingriff des Stützelementes 17 im Anlageelement 16 ermöglicht wird, wenn sich das Werkzeug 11 nicht in Eingriff in das Werkstück 12 befindet, kann trotz einer sehr weichen Auslegung der Dämpfungselemente 15 eine gute Werkzeugführung 11 erreicht werden. Befindet sich das Werkzeug 11 in Eingriff mit dem Werkstück 12, so führt eine Selbstführung des Werkzeugs 11 im Werkstück 12 zu einem sauberen Arbeitsergebnis. Insbesondere können sich durch die Handführung des Motorarbeitsgerätes 10 hervorgerufene Fehlhaltungen der Rahmeneinheit 13 nicht wesentlich auf das Werkzeug 11 übertragen, wodurch das Arbeitsergebnis weiter verbessert wird.

### BEZUGSZEICHENLISTE

- 100: Motorarbeitsgerät
- 10: Motoreinheit
- 11: Werkzeug
- 12: Werkstück
- 13: Rahmeneinheit
- 14: Griffelement
- 15: Dämpfungselement, Dämpfungsfeder
- 16: Anlageelement
- 17: Stützelement
- 18: Dämpfungskörper
- 19: Bodenabschnitt
- 20: Stützarm
- 21: Schneidarm
- 22: Markierungslinie

## Patentansprüche

1. Motorarbeitsgerät (100), insbesondere motorbetriebenes Trennschleifgerät oder motorbetriebenes Sägegerät, mit einer Motoreinheit (10), aufweisend ein Werkzeug (11) zum Eingriff in ein Werkstück (12), und mit einer Rahmeneinheit (13), aufweisend ein Griffelement (14) zum handhaltbaren Betrieb des Gerätes, wobei zwischen der Motoreinheit (10) und der Rahmeneinheit (13) eine mechanische Kopplung vorgesehen ist, die wenigstens ein Dämpfungselement (15) umfasst, **dadurch gekennzeichnet, dass** die Rahmeneinheit (13) wenigstens ein Anlageelement (16) aufweist, gegen das die Motoreinheit (10) anliegt, wenn eine vom Werkstück (12) auf das Werkzeug (11) wirkende Arbeitskraft einen Wert unterhalb eines Mindestwertes aufweist.

2. Motorarbeitsgerät nach Anspruch 1, **dadurch gekennzeichnet, dass** der Mindestwert der Arbeitskraft vom Werkstück (12) auf das Werkzeug (11) 10N bis 110N, vorzugsweise 40N bis 80N und besonders bevorzugt 60N beträgt, ab der sich die Rahmeneinheit (13) aus dem Anlageelement (16) löst.

3. Motorarbeitsgerät nach Anspruch 1 oder 2, **dadurch gekennzeichnet, dass** die Motoreinheit (10) schwerkraftbedingt gegen das Anlageelement (16) zur Anlage gelangt, wenn der Wert der Arbeitskraft einen Wert unterhalb des Mindestwertes aufweist, insbesondere wenn sich das Werkzeug (11) nicht in Eingriff mit dem Werkstück (12) befindet.

4. Motorarbeitsgerät nach einem der Ansprüche 1 bis 3, **dadurch gekennzeichnet, dass** das wenigstens eine Dämpfungselement (15) zumindest eine Dämpfungsfeder (15) aufweist, die derart vorgespannt ist, dass die Motoreinheit (10) gegen das Anlageelement (16) zur Anlage gelangt, wenn der Wert der Arbeitskraft einen Wert unterhalb des Mindestwertes aufweist, insbesondere wenn sich das Werkzeug (11) nicht in Eingriff mit dem Werkstück (12) befindet.

5. Motorarbeitsgerät nach einem der vorgenannten Ansprüche, **dadurch gekennzeichnet, dass** die Motoreinheit (10) wenigstens ein Stützelement (17) aufweist, das gegen das Anlageelement (16) anliegt, wenn der Wert der Arbeitskraft einen Wert unterhalb des Mindestwertes aufweist, insbesondere wenn sich das Werkzeug (11) nicht in Eingriff mit dem Werkstück (12) befindet.

6. Motorarbeitsgerät nach einem der vorgenannten Ansprüche, **dadurch gekennzeichnet, dass** das Anlageelement (16) U- oder V-förmig ausgebildet und das Stützelement (17) zungenförmig ausgeführt ist, das derart in die U-Form in Eingriff gelangt, dass über das Griffelement (14) wenigstens eine Höhen- und Seitenführung des Werkzeuges (11) ermöglicht ist, wenn der Wert der Arbeitskraft einen Wert unterhalb des Mindestwertes aufweist, insbesondere wenn sich das Werkzeug (11) nicht in Eingriff mit dem Werkstück (12) befindet.

7. Motorarbeitsgerät nach einem der vorgenannten Ansprüche, **dadurch gekennzeichnet, dass** das Anlageelement (16) einen elastischen Dämpfungskörper (18) aufweist, der sich zwischen dem Anlageelement (16) und der Motoreinheit (10), insbesondere zwischen dem Anlageelement (16) und dem Stützelement (17), befindet, wenn dieses gegen das Anlageelement (16) anliegt.

8. Motorarbeitsgerät nach einem der vorgenannten Ansprüche, **dadurch gekennzeichnet, dass** die mechanische Kopplung zwischen der Motoreinheit (10) und der Rahmeneinheit (13) drei Dämpfungselemente (15) aufweist, wobei vorzugsweise wenigstens ein Anlageelement (16) mit einem zugeordneten Stützelement (17) angrenzend an zumindest ein Dämpfungselement (15) angeordnet ist.

9. Motorarbeitsgerät nach einem der vorgenannten Ansprüche, **dadurch gekennzeichnet, dass** das Anlageelement (16) zwischen der Motoreinheit (10) und der Rahmeneinheit (13) eine Anordnung aufweist, die derart bestimmt ist, dass der Abstand zwischen dem Anlageelement (16) und dem Werkzeug (11) minimal ist.

10. Motorarbeitsgerät nach einem der vorgenannten Ansprüche, **dadurch gekennzeichnet, dass** die Rahmeneinheit (13) einen Bodenabschnitt (19) aufweist, wobei das Anlageelement (16) am Bodenabschnitt (19) angeordnet oder an diesem angeformt ist.

11. Motorarbeitsgerät nach einem der vorgenannten Ansprüche, **dadurch gekennzeichnet, dass** die Motoreinheit (10) einen Stützarm (20) aufweist, der sich in Richtung zum Bodenabschnitt (19) erstreckt, wobei das Stützelement (17) endseitig am Stützarm (20) angeordnet ist.

## Claims

1. A power tool (100), in particular a motor-operated cut-off grinder or motor-operated saw with a motor unit (10), comprising a tool (11) for engagement in a work piece (12), and with a frame unit (13), comprising a grip element (14) for the hand-held operation of the device, wherein between the motor unit (10) and the frame unit (13) a mechanical coupling is provided, which comprises at least one damping element (15), **characterized in that** the frame unit (13) comprises at least one stop element (16) which the motor unit (10) abuts when a working force acting from the work piece (12) onto the tool (11) has a value below a minimal value.

2. The power tool according to Claim 1, **characterized in that** the minimum value of the working force from the work piece (12) onto the tool (11) is 10N to 110N, preferentially 40N to 80N and most preferably 60N, with effect from which the frame unit (13) separates from the stop unit (16).

3. The power tool according to Claim 1 or 2, **characterized in that** the motor unit (10) under the effect of gravity comes to abut the stop element (16) when the value of the working force has a value below the minimum value, in particular when the tool (11) is not in engagement with the tool (12).

4. The power tool according to any one of the Claims 1 to 3, **characterized in that** the at least one damping element (15) comprises at least one damping spring (15), which is preloaded in such a manner that the motor unit (10) comes to abut the stop element (16) when the value of the working force has a value below the minimum value, in particular when the tool (11) is not in engagement with the work piece (12).

5. The power tool according to any one of the aforementioned claims, **characterized in that** the motor unit (10) comprises at least one support element (17), which abuts the stop element (16) when the value of the working force has a value below the minimum value, in particular when the tool (11) is not in engagement with the work piece (12).

6. The power tool according to any one of the aforementioned claims, **characterized in that** the stop element (16) is designed U or V-shaped and the support element (17) is embodied tongue-shaped, which comes into engagement with the U-shape in such a manner that via the grip element (14) at least one height and side guidance of the tool (11) is made possible when the value of the working force has a value below the minimum value, in particular when the tool (11) is not in engagement with the work piece (12).

7. The power tool according to any one of the aforementioned claims, **characterized in that** the stop element (16) comprises an elastic damping body (18), which is located between the stop element (16) and the motor unit (10), in particular between the stop element (16) and the support element (17) when the latter abuts the stop element (16).

8. The power tool according to any one of the aforementioned claims, **characterized in that** the mechanical coupling between the motor unit (10) and the frame unit (13) comprises three damping elements (15), wherein preferentially at least one stop element (16) with an associated support element (17) is arranged adjoining at least one damping element (15).

9. The power tool according to any one of the aforementioned claims, **characterized in that** the stop element (16) between the motor unit (10) and the frame unit (13) has an arrangement which is defined in such a manner that the spacing between the stop element (16) and the tool (11) is minimal.

10. The power tool according to any one of the aforementioned claims, **characterized in that** the frame unit (13) has a base section (19), wherein the stop element (16) is arranged on the base section (19) or moulded onto the latter.

11. The power tool according to any one of the aforementioned claims, **characterized in that** the motor unit (10) comprises a support arm (20) which extends in the direction of the base section (19), wherein the support element (17) is arranged on the support arm (20) at the end.

## Revendications

1. Appareil de travail motorisé (100), en particulier tronçonneuse à meule motorisée ou appareil à scie motorisé, avec un ensemble de moteur (10), comportant un outil (11) pour entrer en prise avec une pièce (12) et avec un ensemble de cadre (13) comportant un élément de saisie (14) pour faire fonctionner l'appareil en le tenant à la main, un accouplement mécanique étant prévu entre l'ensemble de moteur (10) et l'ensemble de cadre (13) qui comprend au moins un élément d'amortissement (15) **caractérisé en ce que** l'ensemble de cadre (13) comporte au moins un élément d'appui (16) contre lequel l'ensemble de moteur (10) s'appuie si une force de travail de la pièce (12) agissant sur l'outil (11) présente une valeur inférieure à une valeur minimum.

2. Appareil de travail motorisé selon la revendication 1 **caractérisé en ce que** la valeur minimum de la force de travail de la pièce (12) sur l'outil (11) est de 10N à 110N, de préférence 40N à 80N et en particulier de préférence de 60N, à partir de laquelle l'ensemble de cadre (13) se sépare de l'élément d'appui (16).

3. Appareil de travail motorisé selon la revendication 1 ou 2 **caractérisé en ce que** l'ensemble de moteur (10) parvient en appui par gravité contre l'élément d'appui (16), si la valeur de la force de travail présente une valeur inférieure à la valeur minium, en particulier si l'outil (11) ne se trouve pas en prise avec la pièce (12).

4. Appareil de travail motorisé selon une quelconque des revendications 1 à 3 **caractérisé en ce que** le au moins un élément d'amortissement (15) comporte au moins un ressort d'amortissement (15) qui est prétendu de telle sorte que l'ensemble de moteur (10) parvient en appui contre l'élément d'appui (16), si la valeur de la force de travail présente une valeur inférieure à la valeur minimum, en particulier si l'outil (11) ne se trouve pas en prise avec la pièce (12).

5. Appareil de travail motorisé selon une quelconque des revendications précédentes **caractérisé en ce que** l'ensemble de moteur (10) présente au moins un élément de support (17) qui s'appuie contre l'élément d'appui (16), si la valeur de la force de travail présente une valeur inférieure à la valeur minimum, en particulier si l'outil (11) ne se trouve pas en prise avec la pièce (12).

6. Appareil de travail motorisé selon une quelconque des revendications précédentes **caractérisé en ce que** l'élément d'appui (16) est constitué en forme de U ou de V et l'élément de support (17) est exécuté en forme de languette de telle sorte qu'elle parvient en prise dans la forme en U, **en ce que** l'élément de saisie (14) permet au moins un guidage en hauteur et latéral de l'outil (11), si la valeur de la force de travail présente une valeur inférieure à la valeur minimum, en particulier si l'outil (11) ne se trouve plus en prise avec la pièce (12).

7. Appareil de travail motorisé selon une quelconque des revendications précédentes **caractérisé en ce que** l'élément d'appui (16) comporte un corps d'amortissement (18) élastique qui se trouve entre l'élément d'appui (16) et l'ensemble de moteur (10) en particulier entre l'élément d'appui (16) et l'élément de support (17), si celui-ci vient contre l'élément d'appui (16).

8. Appareil de travail motorisé selon une quelconque des revendications précédentes **caractérisé en ce que** l'accouplement mécanique entre l'ensemble de moteur (10) et l'ensemble de cadre (13) comporte trois éléments d'amortissement (15), de préférence au moins un élément d'appui (16) avec un élément de support (17) attribué étant disposé adjacent à au moins un élément d'amortissement (15).

9. Appareil de travail motorisé selon une quelconque des revendications précédentes **caractérisé en ce que** l'élément d'appui (16) entre l'ensemble de moteur (10) et l'ensemble de cadre (13) comporte un agencement qui est défini de telle sorte que l'intervalle entre l'élément d'appui (16) et l'outil (11) est minimum.

10. Appareil de travail motorisé selon une quelconque des revendications précédentes **caractérisé en ce que** l'ensemble de cadre (13) comporte une section de fond (19), l'élément d'appui (16) étant disposé sur la section de fond (19) ou formée sur celle-ci.

11. Appareil de travail motorisé selon une quelconque des revendications précédentes **caractérisé en ce que** l'ensemble de moteur (10) comporte un bras de support (20) qui s'étend en direction de la section de fond (19), l'élément de support (17) étant disposé en extrémité sur le bras de support (20).
